# EUROPEAN PATENT SPECIFICATION

(11) **EP 2 357 762 B1**
(45) Date of publication and mention of the grant of the patent: **30.03.2016**
(21) Application number: 09828545.5
(22) Date of filing: 09.01.2009
(51) Int. Cl.: H04L 12/437

(54) **METHOD AND DEVICE FOR PROTECTING MULTI-RING ETHERNET**
VERFAHREN UND VORRICHTUNG ZUM SCHÜTZEN EINES MEHRRING-ETHERNETS
PROCÉDÉ ET DISPOSITIF DE PROTECTION D' ETHERNET MULTI-RÉSEAUX

(30) Priority: 27.11.2008 CN 200810227364
(43) Date of publication of application: 17.08.2011
(73) Proprietor: ZTE Corporation, Shenzhen, Guangdong 518057 (CN)
(72) Inventor: WU, Shaoyong, Guangdong 518057 (CN)
(74) Representative: Ilgart, Jean-Christophe
(86) International application number: PCT/CN2009/070092
(87) International publication number: WO 2010/060284

(56) References cited:
- EP-A1- 1 575 221
- EP-A1- 1 575 221
- WO-A1-2008/120931
- CN-A- 1 747 439
- CN-A- 1 976 311
- CN-A- 101 072 237
- US-A1- 2003 165 119

## Description

### Field of the Invention

The present invention relates to the field of communication, in particular to a method and a device for protecting a multi-ring Ethernet.

### Background of the Invention

At present, with the development of the Ethernets towards the multi-service bearing, some services require higher reliability and higher real-time of networks, thus the Ethernet widely adopts the ring networking which can improve the reliability of the networks. In addition, in the protection solution of the ring networking, it is generally required that the time for fast protection switch is below 50ms. Currently, the technology of the fast protection switch can be realized based on the RFC3619 protocol of the Internet Engineering Task Force (IETF for short) and the G.8032vl protocol of the International Telecommunication Union (ITU-T for short).

Based on the above protocols, especially the G.8032vl protocol, the Ethernet protection technology is mainly applied to the protection of the Ethernet of the single-ring topology networking, and can effectively solve the network storm problem in the single-ring topology networking. Herein, for the network storm, if there is a closed ring in the Ethernet, data frames (such as broadcast frame and unknown unicast frame) will be continuously and circularly transmitted in the closed ring according to the forwarding principle of the Ethernet. Because the circularly transmitted of the data frames can not be stopped, the transmission of excessive data frames will occupy lots of network bandwidths and even block the network, such phenomenon is referred to as the network storm. However, most of the existing Ethernets are constructed by the multi-ring topology, and the multi-ring Ethernet constructed by the multi-ring topology networking is generally constructed by multiple intersected single rings among which there are common links. Because of the common links among the multiple single rings, when the protection technology for the Ethernet constructed by the single-ring topology is directly applied to the multi-ring Ethernet, the closed ring in each single ring of the multi-ring Ethernet can be avoided, but a new closed ring will be generated in the whole multi-ring Ethernet, so that a new network storm will occur.

At present, there is still no effective solution for avoiding the network storm problem caused by the closed ring in the multi-ring Ethernet yet.

Patent publication US2003/0165119 A1 discloses protection in in a multi-ring network whereby loops are prevented in case of link failures by assigning priorities to rings and ports. Only the master bridge of the higher priority ring changes the status of the protection port from blocking to forwarding.

### Summary of the Invention

Considering that a technology for avoiding the network storm problem caused by the closed ring in the multi-ring Ethernet is required in the related art, the invention is provided and aims to provide an improved protection solution for the multi-ring Ethernet for solving the abovementioned problem in related art.

In order to achieve the aim, a method for protecting a multi-ring Ethernet is provided according to one aspect of the present invention.

The method for protecting the multi-ring Ethernet comprising: configuring a multi-ring Ethernet to ensure the multi-ring Ethernet being respective subsets without common link thereamong; and the respective subsets in the multi-ring Ethernet controlling protection switch of the multi-ring Ethernet respectively.

The step of configuring the multi-ring Ethernet to ensure the multi-ring Ethernet being respective subsets without the common links thereamong comprises: dividing the multi-ring Ethernet into multiple subsets without the common links thereamong, wherein each subset is divided into a primary ring, a sub-ring and a ring, and the primary ring, the sub-ring and the ring belong to the subsets.

The step of the respective subsets in the multi-ring Ethernet controlling the protection switch of the multi-ring Ethernet respectively comprises:
A1. blocking or opening a port of a ring protection link attribution node of the primary ring, when the primary ring controls the protection switch of the multi-ring Ethernet; and A2. blocking or opening a port of a ring protection link attribution node of the sub-ring, when the sub-ring controls the protection switch of the multi-ring Ethernet..

The method further comprises: further configuring the multi-ring Ethernet to ensure that there is no common link among the respective subsets in the multi-ring Ethernet and there are common nodes between the adjacent subsets; when the common nodes obtain an identifier indicating the attribution of a ring, performing a judgement according to the identifier indicating the attribution of a ring, wherein if a current subset is the primary ring, the A1 is executed; and if the current subset is the sub-ring, the A2 is executed..

When the identifier indicating the attribution of a ring is encapsulated in a format of a local request, the step of performing a judgement according to the identifier indicating the attribution of a ring comprises: positioning a ring to the corresponding subset protection protocol by the identifier indicating the attribution of the ring according to a corresponding relationship between the identifier indicating the attribution of a ring and a subset protection protocol to which a ring belongs; wherein if the subset protection protocol is a ring protection protocol of the primary ring, the current subset is determined to be the primary ring; and if the subset protection protocol is a ring protection protocol of the sub-ring, the current subset is determined to be the sub-ring..

Preferably, the identifier indicating the attribution of a ring comprises a ring identifier or a link identifier in the ring.

Preferably, when the identifier indicating the attribution of a ring is encapsulated in a format of a remote protocol frame, the step of performing a judgement according to the identifier indicating the attribution of a ring comprises: positioning a ring to the corresponding subset protection protocol by the identifier indicating the attribution of the ring according to a corresponding relationship between the identifier indicating the attribution of a ring and a subset protection protocol to which a ring belongs; wherein if the subset protection protocol is a ring protection protocol of the primary ring, the current subset is determined to be the primary ring; and if the subset protection protocol is a ring protection protocol of the sub-ring, the current subset is determined to be the sub-ring; wherein the identifier indicating the attribution of a ring comprises a ring identifier or a link identifier in the ring; or, using a frame identifier of the remote protocol frame for identifying the current subset and determining the current subset to be the primary ring or the sub-ring according to the frame identifier of the remote protocol frame; or, determining the current subset to be the primary ring or the sub-ring according to a node to which a port reported by the remote protocol frame belongs..

A device for protecting a multi-ring Ethernet is provided according to independent claim 4.

By configuring the multi-ring Ethernet in the invention, it is ensured that there is no common link among the subsets in the multi-ring Ethernet; and respective subsets in the multi-ring Ethernet controls the protection switch of the Ethernet respectively. In the invention, since the Ethernet is topologically divided based on the principle that there is no common link among multiple subsets in the multi-ring Ethernet, and it is stipulated that a common link is only protected by one subset according to topological division, it is prevented that the common link in the multi-ring Ethernet is protected by multiple single rings; and the new network storm problem in the multi-ring Ethernet result from a new closed ring which is generated by the nodes to which the ring protection links of the multiple single rings belong opening the originally blocked ports when the common link in the multi-ring Ethernet fails, is avoided. The invention realizes the protection of the multi-ring Ethernet and is convenient to operate and highly efficient.

Other features and advantages of the invention will be described in the following specification and partially become obvious from the specification or understood by implementing the invention. The aim and other advantages of the invention can be realized and obtained by the specified structures in the specification, claims and drawings.

### Brief Description of the Drawings

Fig. 1 is a diagram of a topology networking of a single-ring Ethernet according to the related art;
Fig. 2 is a diagram of the operation applying a protection technology for an Ethernet constructed by a single-ring topology when links are normal according to the related art;
Fig. 3 is a diagram of the operation applying a protection technology for an Ethernet constructed by a single-ring topology when links fail according to the related art;
Fig. 4 is a diagram of the operation that a closed ring is generated when a protection technology for an Ethernet constructed by a single-ring topology is applied to a multi-ring Ethernet according to the related art;
Fig. 5 is a flow chart of the implementation of a method for protecting a multi-ring Ethernet according to a method embodiment of the invention;
Fig. 6 is a diagram of the operation applying a method of the invention when links in a multi-ring Ethernet are normal according to the first embodiment;
Fig. 7 is a diagram of the operation applying a method of the invention when a link in a primary ring fails according to the first embodiment;
Fig. 8 is a diagram of the operation applying a method of the invention when a link in a sub-ring fails according to the first embodiment;
Fig. 9 is a diagram of the operation applying a method of the invention when links in a multi-ring Ethernet are normal according to the second embodiment;
Fig. 10 is a diagram of the operation applying a method of the invention when a common link in the sub-ring unidirectionally fails according to the second embodiment;
Fig. 11 is a block diagram of a device for protecting a multi-ring Ethernet according to a device embodiment;
Fig. 12 is a block diagram of a preferred structure example of a device for protecting a multi-ring Ethernet according to a device embodiment.

### Detailed Description of the Embodiments

### Function Overview

The embodiments of the invention provides an improved protection solution for a multi-ring Ethernet, for avoiding the network storm problem caused by a closed ring in a multi-ring Ethernet. The basic idea of the embodiments of the invention is to configure the Ethernet based on the principle that there is no common link among multiple subsets in the multi-ring Ethernet, so as to realize the protection for the multi-ring Ethernet constructed by a multi-ring topology.

The embodiments of the invention will be described in detail with reference to the drawings hereinafter. It should be understood that the preferred embodiments described herein are only used for describing and explaining the invention rather than limiting the invention. If not conflicted, the embodiments and features thereof can be combined with one another.

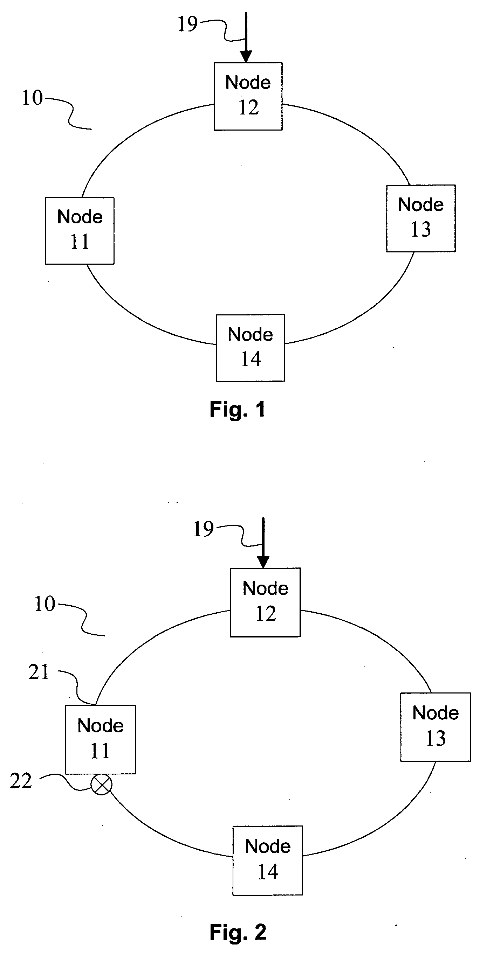

With reference to the prior art, Fig. 1 shows a structure of a topology networking of a single-ring Ethernet according to the related art. As shown in Fig. 1, a network 10 is a single-ring Ethernet constructed by a single-ring topology and consists of a node 11, a node 12, a node 13, a node 14 and links among the four nodes, wherein each node is a device supporting the Ethernet function, for example, an Ethernet exchanger or other devices supporting the Ethernet function. Protected data 19 can be forwarded from the node 12 to the node 14 through the network 10 in two transmission paths respectively, which are the node 12 -> the node 13 -> the node 14; and the node 12 -> the node 11 -> the node 14. It can be concluded that the protected data 19 can be transmitted in two transmission paths in the network 10 and transmitted continuously and circularly, so that the transmission can not be stopped. Under such condition, the transmission of the protected data 19 will occupy lots of network bandwidths and even block the network. Such condition is the network storm problem caused by the closed ring in the Ethernet.

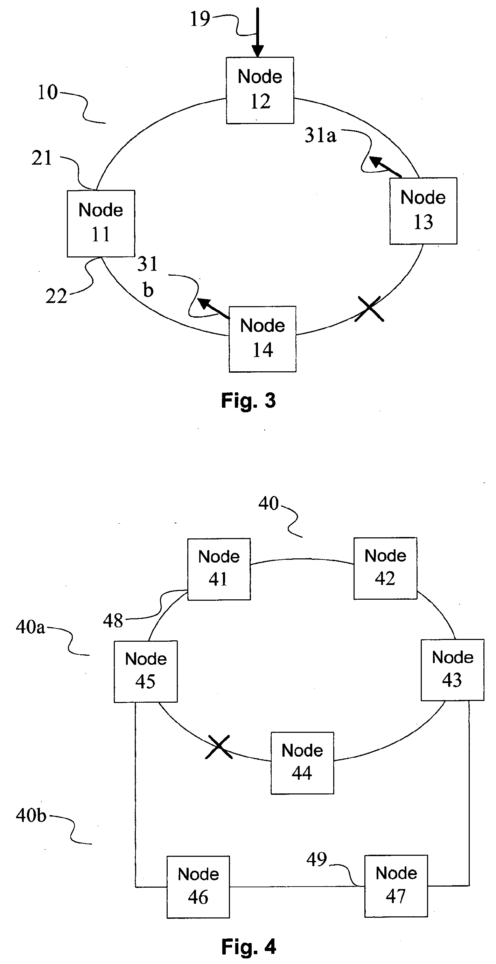

In terms of the protection technology for the Ethernet constructed by a single-ring topology, when an Ethernet protection protocol is applied in the network 10 and links in the ring are normal, a node in the network 10 is set to block a port of an adjacent ring on the node and intersected with the link, so that the protected data 19 can not be transmitted through the port, and the network storm caused by the closed ring in the Ethernet is avoided. In the above, the node blocking a port on an adjacent ring when the links on the ring are normal is called a ring protection link attribution node. For example, Fig. 2 shows an exemplary way of the operation applying a protection technology for an Ethernet constructed by a single-ring topology when links are normal according to the related art. As shown in Fig. 2, the node 11 can be used as the ring protection link attribution node in the network 10. When the links in the ring are normal, a port 21 on the node 11 intersected with a link is open, while a port 22 on the node 11 intersected with a link is blocked, so as to ensure that there is only one transmission path in the network 10, i.e., prevent the protected data 19 to form a closed ring, then the protected data 19 is forwarded from the node 12 to the node 14 through the network 10 in only one transmission path, i.e., the node 12 -> the node 13 -> the node 14. Fig. 3 shows an exemplary way of the operation applying the protection technology for the Ethernet constructed by the single-ring topology when the links fail according to the related art. As shown in Fig. 3, there is a failure in the link in the ring between the node 13 and the node 14. When the failure is detected by the node 13 or the node 14, the node 13 or the node 14 respectively sends a link failure alarm frame, i.e., the link failure alarm frames identified by 31a and 31b respectively in Fig. 3, to the ring. The node 11 opens the port 22 originally blocked after receiving any one of the link failure alarm frames, so that the transmission path of the protected data 19 in the network 10 is re-communicated and the protected data 19 is transmitted in the network 10 in a new transmission path, i.e., the node 12 -> the node 11 -> the node 14. Therefore, after the re-communication of the transmission path, there is still only one transmission path in the network 10, so that the network storm problem caused by the closed ring formed by the protected data 19 can be effectively avoided.

However, the protection technology for the Ethernet constructed by the single-ring topology can not be directly applied to the protection of a multi-ring Ethernet because the multi-ring Ethernet constructed by a multi-ring topology is generally constructed by multiple single rings intersected and there are common links among the multiple single rings. Because of the common links among the multiple single rings, when a common link belonged to the multiple single rings fails, the multiple single rings all adopt the protection technology for the Ethernet constructed by the single-ring topology to perform protection, i.e., each single ring opens the port originally blocked on the ring protection link attribution node, so that a new closed ring will be generated in the whole multi-ring Ethernet.

For example, Fig. 4 shows an exemplary way of the operation that a closed ring is generated when the protection technology for the Ethernet constructed by the single-ring topology is applied to the multi-ring Ethernet according to the related art. As shown in Fig. 4, a network 40 is a multi-ring Ethernet consisting of a single ring 40a and a single ring 40b which are intersected. In the above, the single ring 40a consists of a node 41, a node 42, a node 43, a node 44, a node 45 and links among the five nodes, wherein the node 41 is the ring protection link attribution node of the single ring 40a. When the links on the single ring 40a are normal, a port 48 which is on the node 41 and intersected with a link is blocked, so as to ensure that there is only one transmission path in the single ring 40a and avoid a closed ring generate. The single ring 40b consists of a node 43, a node 44, a node 45, a node 46, a node 47 and links among the five nodes, wherein the node 47 is the ring protection link attribution node of the single ring 40b. When the links on the single ring 40b are normal, a port 49 which is on the node 47 and intersected with a link is blocked, so as to ensure that there is only one transmission path in the single ring 40b and avoid a closed ring generate.

Therefore, as shown in Fig. 4, the single ring 40a is adjacent to the single ring 40b, and the common nodes between the single ring 40a and the single ring 40b are the node 43 and the node 45, and the common links are the links among the node 43, the node 44 and the node 45. So, in terms of the single ring 40a, when the link between the node 44 and the node 45 fails, the node 44 and the node 45 send a link failure alarm frame to the single ring 40a respectively according to the protection technology for the Ethernet constructed by the single-ring topology in the single ring 40a. When receiving any one of the link failure alarm frames, the node 41 opens the port 48 originally blocked, so that the protected data can be transmitted through the port 48, and there is still only one transmission path in the single ring 40a after the transmission path of the protected data is re-communicated, thereby effectively preventing the network storm problem caused by the closed ring generated by the protected data.

Similarly, in terms of the single ring 40b, when the link between the node 44 and the node 45 fails, the node 44 and the node 45 send a link failure alarm frame to the single ring 40b respectively according to the protection technology for the Ethernet constructed by the single-ring topology in the single ring 40b. When receiving any one of the link failure alarm frames, the node 47 opens the port 49 originally blocked, so that the protected data can be transmitted through the port 49, and there is still only one transmission path in the single ring 40b after the transmission path of the protected data is re-communicated, thereby effectively preventing the network storm problem caused by the closed ring generated by the protected data. However, after the port 48 and the port 49 are opened, two transmission paths for bi-directional transmission are formed in the network 40, which generate a new closed ring, i.e., the node 41 < -> the node 42< -> the node 43< -> the node 47< -> the node 46< -> the node 45< -> the node 41. The new closed ring will cause a new network storm problem in the network 40. To sum up, because the protection technology for the Ethernet networked by the single-ring topology is directly applied to the multi-ring Ethernet, a new closed ring is generated in the multi-ring Ethernet and consequently causes a new network storm. Therefore, it is necessary to research a protection technology which can be directly applied to the multi-ring Ethernet, and the invention is provided for this. The solution of the invention is simple and convenient to operate, can solve the network storm problem caused by the closed ring in a multi-ring Ethernet, and realizes the protection of the multi-ring Ethernet constructed by a multi-ring topology.

The protection technology for the multi-ring Ethernet adopted in the invention is specifically described hereinafter.

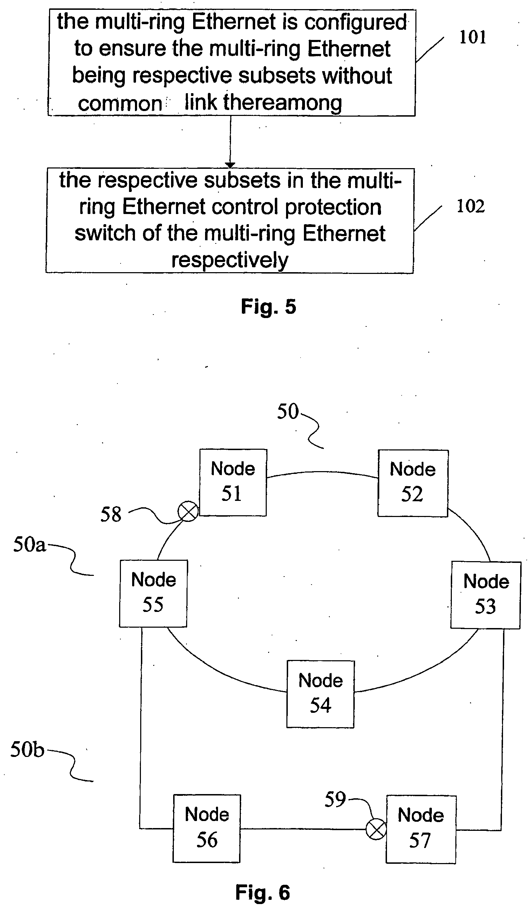

Fig. 5 shows a flow of a method for protecting a multi-ring Ethernet according to a method embodiment of the invention. As shown in Fig. 5, the method for protecting a multi-ring Ethernet according to the method embodiment includes the following steps.

Step 101, the multi-ring Ethernet is configured to ensure the multi-ring Ethernet being respective subsets without common link thereamong.

Herein, the specifically process of the step 101 comprises: the multi-ring Ethernet is configured, for example, topologically divided into multiple subsets without common links thereamong. Each subset is divided into a primary ring, a sub-ring and a ring, wherein the primary ring, the sub-ring and the ring belong to the subset which is topologically divided. After the multi-ring Ethernet is topologically divided into the primary ring and the sub-ring, there is no common link between the primary ring and the sub-ring, i.e., both the primary ring and the sub-ring are the subsets of the multi-ring Ethernet. The sub-ring can be regarded as a subset connected with other networks in multiple rings. When the sub-ring is connected with the primary ring, the set consisting of the sub-ring and the primary ring is also a subset of the multi-ring Ethernet and can be called a ring, i.e., other networks in the multiple rings are called the ring. Particularly, the primary ring can be called the ring when connected with the sub-ring. For example, there is a primary ring 1, a sub-ring 2 and a sub-ring 3 in the multi-ring Ethernet, wherein the sub-ring 2 is connected with the primary ring 1; the sub-ring 3 is connected with the sub-ring 2. According to the above definition of the subset, the primary ring 1, the sub-ring 2 and the sub-ring 3 are the subsets of the multi-ring Ethernet respectively. In point of the sub ring 3, which is connected in an Ethernet ring consisting of the sub-ring 2 and the primary ring 1, and the network consisting of the sub-ring 2 and the primary ring 1 is also a subset of the multi-ring Ethernet, and the subset consisting of the sub-ring 2 and the primary ring 1 is called a ring.

Step 102, the respective subsets in the multi-ring Ethernet control protection switch of the multi-ring Ethernet respectively.

Herein, the specifically process of the step 102 comprises:
Step 1021, when the primary ring controls the protection switch of the multi-ring Ethernet, a port of a ring protection link attribution node of the primary ring is blocked or opened.

Specifically, at first, when the links on the primary ring are normal, the port of the ring protection link attribution node of the primary ring is generally blocked to avoid the generation of two transmission paths for the protected data in the primary ring, thereby preventing the network storm caused by the closed ring. Then, when a link in the primary ring is failed, the ring protection link attribution node of the primary ring open the port originally blocked after receiving a link failure alarm frame, so that the protected data can be transmitted through the port of the ring protection link attribution node of the primary ring. After the transmission path of the protected data is re-communicated, there is still only one transmission path in the primary ring, so as to effectively prevent the network storm problem caused by the closed ring generated by the protected data.

Step 1022, when the sub-ring controls the protection switch of the multi-ring Ethernet, a port of a ring protection link attribution node of the sub-ring is blocked or opened.

Specifically, at first, when the links on the sub-ring are normal, the port of the ring protection link attribution node of the sub-ring is generally blocked to avoid the generation of two transmission paths for the protected data in the sub-ring, thereby preventing the network storm caused by the closed ring. Then, when a link in the sub-ring is failed, the ring protection link attribution node of the sub-ring open the port originally blocked after receiving a link failure alarm frame, so that the protected data can be transmitted through the port of the ring protection link attribution node of the sub-ring. After the transmission path of the protected data is re-communicated, there is still one transmission path in the sub-ring, so as to effectively prevent the network storm problem caused by the closed ring generated by the protected data.

After the step 102 is executed, the method further includes:
step 201, the multi-ring Ethernet is continued to configure, for example, is topologically divided to ensure that there is no common link among the respective subsets in the multi-ring Ethernet and there are common nodes between the adjacent subsets;
step 202, when the common nodes obtain an identifier indicating the attribution of a ring, if current subset is determined to be the primary ring according to the identifier indicating the attribution of a ring, the step 1021 is executed; and if the current subset is determined to be the sub-ring according to the identifier indicating the attribution of a ring, the step 1022 is executed.

Herein, in terms of the judgement made according to the identifier indicating the attribution of a ring, the judgement process will be different if the identifier indicating the attribution of a ring is encapsulated in a different format.

Under the first circumstance, when the identifier indicating the attribution of a ring is encapsulated in a format of a local request, the specifically process of the judgement made according to the identifier indicating the attribution of a ring comprises: according to a corresponding relationship, locally stored by the common nodes, between the identifier indicating the attribution of a ring and a subset protection protocol to which a ring belongs, positioning a ring to the corresponding subset protection protocol by the identifier indicating the attribution of a ring; wherein if the subset protection protocol is a ring protection protocol of the primary ring, the current subset is determined to be the primary ring; and if the subset protection protocol is a ring protection protocol of the sub-ring, the current subset is determined to be the sub-ring. In the above, the identifier indicating the attribution of a ring can be a ring identifier or a link identifier in the ring.

Under the second circumstance, when the identifier indicating the attribution of a ring is encapsulated in a format of a remote protocol frame, the specifically process of a judgement is made according to the identifier indicating the attribution of a ring is divided into the following three circumstances (a to c).
a. Position a ring to the corresponding subset protection protocol by the identifier indicating the attribution of the ring according to a corresponding relationship between the identifier indicating the attribution of a ring and a subset protection protocol to which a ring belongs,; wherein if the subset protection protocol is a ring protection protocol of the primary ring, the current subset is determined to be the primary ring; and if the subset protection protocol is a ring protection protocol of the sub-ring, the current subset is determined to be the sub-ring. In the above, the identifier indicating the attribution of the ring can be a ring identifier or a link identifier in the ring.
b. A frame identifier of the remote protocol frame is used for identifying the current subset and the current subset is determined to be the primary ring or the sub-ring according to the frame identifier of the remote protocol frame.
   Specifically, the frame identifier of the remote protocol frame is used for identifying the ring subset of the current ring. The remote protocol frame carries information used for identifying the ring subset for processing the remote protocol frame and the ring subset for processing the remote protocol frame is determined according to the information.
c. The current subset is determined to be the primary ring or the sub-ring according to a node to which a port reported by the remote protocol frame belongs.

Specifically, the current subset is determined to be the primary ring or the sub-ring, according to the subset to which the port reported by the remote protocol frame belongs, wherein each port only correspond to one subset.

The operation situation of the multi-ring Ethernet in which the method of the invention is applied under a practical application condition is described hereinafter.

### The First Embodiment

Fig. 6 shows an operation way applying the method of the invention when links in the multi-ring Ethernet are normal according to the first embodiment. As shown in Fig. 6, a multi-ring Ethernet 50 is divided into multiple subsets without common links thereamong. The multi-ring Ethernet 50 can be divided into a primary ring 50a and a sub-ring 50b, and both of the primary ring 50a and the sub-ring 50b are the subsets of the multi-ring Ethernet 50. Herein, the primary ring can be called a ring with a high priority and the sub-ring can be called a ring with a low priority. In the above, the primary ring 50a consists of a node 51, a node 52, a node 53, a node 54, a node 55 and links among the five nodes. The sub-ring 50b consists of a node 56, a node 57, the link between the node 55 and the node 56, the link between the node 56 and the node 57, and the link between the node 57 and the node 53. The node 51 is the ring protection link attribution node in the primary ring 50a. When the links in the primary ring are normal, a port of the ring protection link attribution node in the primary ring 50a is blocked and identified as 58. The node 57 is the ring protection link attribution node in the sub-ring 50b. When the links in the sub-ring are normal, a port of the ring protection link attribution node in the sub-ring 50b is blocked and identified as 59.

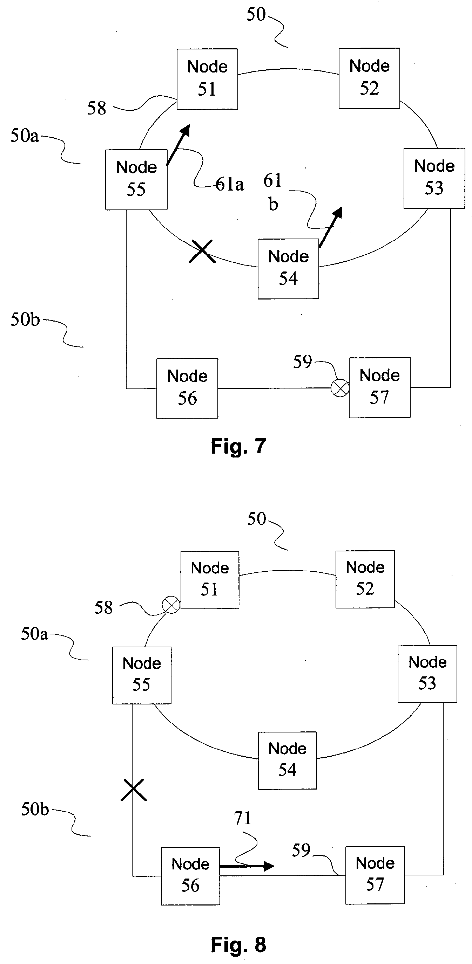

After the multi-ring Ethernet 50 is divided into the primary ring 50a and the sub-ring 50b, the links among the node 53, the node 54 and the node 55 are protected by the primary ring 50a rather than the sub-ring 50b, and the primary ring 50a controls the protection switch, so that there is no common link between the primary ring 50a and the sub-ring 50b. When a link in the primary ring 50a or the sub-ring 50b fails, a node adjacent to the failed link detects the link failure and then sends a link failure alarm frame to the primary ring 50a or the sub-ring 50b to which the failed link belongs. The ring protection link attribution node of the primary ring 50a or the sub-ring 50b to which the failed link belongs opens a non-failed blocked port after receiving the link failure alarm frame. For example, Fig. 7 shows an exemplary way of the operation applying the method of the invention when a link of the primary ring fails according to the first embodiment. As shown in Fig. 7, when the link between the node 54 and the node 55 bi-directionally fails, the node 54 or the node 55 sends a link failure alarm frame 61 a or 61 b to the primary ring 50a after detecting the link failure because the failed link is prescribed to be protected by the primary ring 50a. The node 51 opens the port 58 after receiving the link failure alarm frame in the primary ring 50a. Since the link between the node 54 and the node 55 is not protected by the sub-ring 50b, the node 57, i.e., the ring protection link attribution node of the sub-ring 50b, does not open the port 59. Fig. 8 shows an exemplary way of the operation applying the method of the invention when a link of the sub-ring is failed according to the first embodiment. As shown in Fig. 8, when the link between the node 55 and the node 56 bi-directionally fails, the node 55 and the node 56 sends a link failure alarm frame 71 to the sub-ring 50b after detecting the link failure since the failed link is prescribed to be protected by the sub-ring 50b. The node 57 opens the port 59 after receiving the link failure alarm frame 71 in the sub-ring 50b. Since the link between the node 55 and the node 56 is not protected by the primary ring 50a, the node 51, i.e., the ring protection link attribution node of the primary ring 50a, does not open the port 58.

### The Second Embodiment

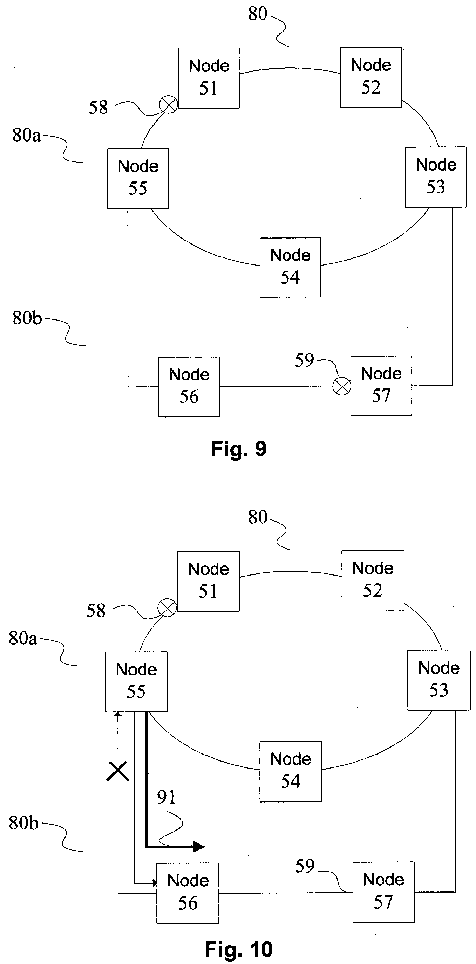

The second embodiment is different from the first embodiment in that: in the first embodiment, the multi-ring Ethernet is divided into the primary ring and the sub-ring between which there is no common link, besides, since the primary ring and the sub-ring are not adjacent to each other, there is no common node between them; while in the second embodiment, there is no common link between the primary ring and the sub-ring, but the primary ring and the sub ring are adjacent to each other, so that there are common nodes between them. Fig. 9 shows an exemplary way of the operation applying the method of the invention when links in a multi-ring Ethernet are normal according to the second embodiment. As shown in Fig. 9, a multi-ring Ethernet 80 can be divided into a primary ring 80a and a sub-ring 80b, both of which are the subsets of the multi-ring Ethernet 80, wherein the primary ring can be called a ring with a high priority; and the sub-ring can be called a ring with a low priority. In the above, the primary ring 80a consists of a node 51, a node 52, a node 53, a node 54, a node 55 and links among the five nodes. The sub-ring 80b consists of a node 55, a node 56, a node 57, a node 53, the link between the node 55 and the node 56, the link between the node 56 and the node 57, and the link between the node 57 and the node 53. There is no common link between the primary ring 80a and the sub-ring 80b after the multi-ring Ethernet 80 is divided into the primary ring 80a and the sub-ring 80b, but there may be common nodes between the primary ring 80a and the sub-ring 80b because the primary ring 80a and the sub-ring 80b are adjacent to each other, wherein the node 53 and the node 55 are the common nodes between the primary ring 80a and the sub ring 80b. Ring protection protocols of multiple rings to which the common nodes belong operate on the common nodes. Because the identifier indicating the attribution of a ring may be encapsulated in different formats, the process of judging whether the primary ring or the sub-ring controls the protection switch subsequently is different. For example, under the first circumstance, the identifier indicating the attribution of a ring requested is encapsulated in a local request. When a common node receives the identifier indicating the attribution of a ring encapsulated in the format of the local request, such as a ring identifier or a link identifier on a ring, according to the corresponding relationship, locally stored by the common node, between the identifier indicating the attribution of a ring and the subset protection protocol to which a ring belongs, the common node is positioned to the subset protection protocol corresponding to the ring identifier by the ring identifier, or is positioned to the subset protection protocol corresponding to the link identifier in the ring by the link identifier in the ring. If the subset protection protocol is the ring protection protocol of the primary ring, the current subset is determined to be the primary ring and the primary ring controls the protection switch subsequently; and if the subset protection protocol is the ring protection protocol of the sub-ring, the current subset is determined to be the sub-ring and the sub-ring controls the protection switch subsequently. Under a second circumstance, the identifier indicating the attribution of a ring requested is encapsulated in a remote protocol frame, such as a ring identifier, the judgement way adopted is the same as that adopted under the first circumstance. Then the current subset is determined to be the primary ring or the sub-ring according to the node to which the port reported by the remote protocol frame belongs, so as to determine whether the primary ring or the sub-ring controls the protection switch subsequently. For example, as shown in Fig. 9, the node 55 as the common node receives a remote protocol frame reported by the node 51, the node 54 or the node 56 respectively. Since the node 51 and the node 54 belong to the primary ring 80a, the current subset is determined to be the primary ring and the primary ring controls the protection switch; or since the node 56 belongs to the sub-ring 80b, the current subset is determined to be the sub-ring and the sub-ring controls the protection switch.

In addition, the protection way of the second embodiment can effectively deal with the situation where adjacent links of the common nodes in the sub-ring fail uni-directionally. Fig. 10 shows an exemplary way of the operation applying the method of the invention when the common links in the sub-ring fail uni-directionally according to the second embodiment. As shown in Fig. 10, when the link between the node 55 and the node 56 fails uni-directionally, i.e., the link fails in the direction from the node 56 to the node 55 and is normal in the direction from the node 55 to the node 56, the node 55 sends a link failure alarm frame 91 to the sub-ring 80b after detecting the uni-directional link failure because the failed link is protected by the sub-ring 80b. The node 57, i.e., the ring protection link attribution node of the sub-ring 80b, will open a port 59 originally blocked after receiving the link failure alarm frame of the present ring. The way for processing link failures in other formats in the second embodiment is the same as that in the first embodiment, such as processing the bi-directional link failure between the node 54 and the node 55 or between the node 55 and the node 56 in Fig. 10. There are many ways for a node to detect a uni-directional link failure, for example, the node scans the physical state of a port, or a port transmits an alarm notification after detecting the failure, or adjacent nodes send a protocol frame to one another for detection, wherein if the protocol frame is not received within a period time, it is deemed a link fails, and etc..

It can be concluded that more failure types can be processed in the second embodiment than that in the first embodiment of the invention, for example, a uni-directional link failure can be detected and processed, while in the first embodiment, only a bi-directional link failure can be detected and processed at present. In the second embodiment, the ring protection link attribution node of the sub-ring can be also set on a common node so as to have a wider setting range than that in the first embodiment. Specifically, in the first embodiment, there is no common node between the sub-ring and the primary ring, i.e., the common node in the second embodiment only belongs to the primary ring in the first embodiment, so that the ring protection link attribution node of the sub-ring can not be set on the common node; while in the second embodiment, the common node belongs to both the sub-ring and the primary ring, so that the ring protection link attribution node of the sub-ring can be set on the common node, therefore, the setting range in the second embodiment is wider than that in the first embodiment.

### Device Embodiment

In the present embodiment, a device for protecting a multi-ring Ethernet is provided.

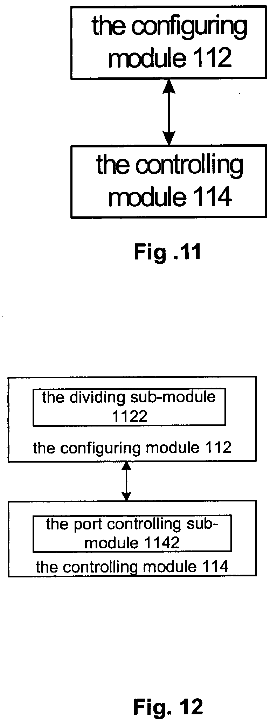

As shown in Fig. 11, the device for protecting the multi-ring Ethernet according to the present embodiment includes a configuring module 112 and a controlling module 114. The functions of each module of the device shown in Fig. 11 will be described in detail hereinafter.

The configuring module 112 is adapted to configure the multi-ring Ethernet to ensure the multi-ring Ethernet being respective subsets without common links thereamong; and the controlling module 114 is connected to the configuring module 112 and adapted to control the respective subsets in the multi-ring Ethernet to control protection switch of the multi-ring Ethernet.

Fig. 12 is a block diagram of a preferred structure of the device for protecting the multi-ring Ethernet according to the present embodiment. As shown in Fig. 12, based on the device shown in Fig. 11, the configuring module 112 further includes a dividing sub-module 1122 adapted to divide the multi-ring Ethernet into multiple subsets without the common links thereamong, wherein each subset is divided into a primary ring and a sub-ring both of which belong to the subset; the controlling module 114 further includes a port controlling sub-module 1142 adapted to block or open a port of a ring protection link attribution node of the primary ring in the case that the primary ring controls the protection switch of the multi-ring Ethernet; and block or open a port of a ring protection link attribution node of the sub-ring in the case that the sub-ring controls the protection switch of the multi-ring Ethernet.

The device according to the present embodiment can also execute the process in Fig. 5 to Fig. 10, so as to avoid the network storm caused by the closed ring in the multi-ring Ethernet and protect the multi-ring Ethernet constructed by the multi-ring topology.

To sum up, the solution of the invention not only avoids the network storm problem caused by the closed ring in the multi-ring Ethernet and realizes the protection of the multi-ring Ethernet constructed by the multi-ring topology, but also prevents the closed rings and the network storm from being generated when the protection technology for the Ethernet constructed by the single-ring topology is directly applied to the multi-ring Ethernet and expands the application range of the protection for the Ethernet ring.

## Claims

1. A method for protecting a multi-ring Ethernet, **characterized by** comprising:
configuring a multi-ring Ethernet to ensure the multi-ring Ethernet being respective subsets without common link thereamong, wherein the step of configuring the multi-ring Ethernet to ensure the multi-ring Ethernet being respective subsets without the common links thereamong comprises: dividing the multi-ring Ethernet into multiple subsets without the common links thereamong, wherein each subset comprises at least one of a primary ring and a sub-ring, and the primary ring and the sub-ring belong to the subsets; and
the respective subsets in the multi-ring Ethernet controlling protection switch of the multi-ring Ethernet respectively, wherein the protection switch is controlled by only one of the respective subsets depending on which subset is concerned of an error, wherein the step of the respective subsets in the multi-ring Ethernet controlling the protection switch of the multi-ring Ethernet respectively comprises: A1. blocking or opening a port of a ring protection link attribution node of the primary ring, when the primary ring controls the protection switch of the multi-ring Ethernet; and A2. blocking or opening a port of a ring protection link attribution node of the sub-ring, when the sub-ring controls the protection switch of the multi-ring Ethernet; **characterized in that**:
the method further comprises:
further configuring the multi-ring Ethernet to ensure that there is no common link among the respective subsets in the multi-ring Ethernet and there are common nodes between the adjacent subsets;
when the common nodes obtain an identifier indicating the attribution of a ring, performing a judgement according to the identifier indicating the attribution of a ring, wherein if a current subset is the primary ring, the A1 is executed; and if the current subset is the sub-ring, the A2 is executed;
wherein when the identifier indicating the attribution of a ring is encapsulated in a format of a local request, the step of performing a judgement according to the identifier indicating the attribution of a ring comprises:
positioning a ring to the corresponding subset protection protocol by the identifier indicating the attribution of the ring according to a corresponding relationship between the identifier indicating the attribution of a ring and a subset protection protocol to which a ring belongs;
wherein if the subset protection protocol is a ring protection protocol of the primary ring, the current subset is determined to be the primary ring; and if the subset protection protocol is a ring protection protocol of the sub-ring, the current subset is determined to be the sub-ring.

2. The method according to claim 1, **characterized in that** the identifier indicating the attribution of a ring comprises a ring identifier or a link identifier in the ring.

3. The method according to claim 1, **characterized in that** when the identifier indicating the attribution of a ring is encapsulated in a format of a remote protocol frame, the step of performing a judgement according to the identifier indicating the attribution of a ring comprises:
positioning a ring to the corresponding subset protection protocol by the identifier indicating the attribution of the ring according to a corresponding relationship between the identifier indicating the attribution of a ring and a subset protection protocol to which a ring belongs;
wherein if the subset protection protocol is a ring protection protocol of the primary ring, the current subset is determined to be the primary ring; and if the subset protection protocol is a ring protection protocol of the sub-ring, the current subset is determined to be the sub-ring; wherein the identifier indicating the attribution of a ring comprises a ring identifier or a link identifier in the ring;
or,
using a frame identifier of the remote protocol frame for identifying the current subset and determining the current subset to be the primary ring or the sub-ring according to the frame identifier of the remote protocol frame;
or,
determining the current subset to be the primary ring or the sub-ring according to a node to which a port reported by the remote protocol frame belongs.

4. A device for protecting a multi-ring Ethernet, **characterized by** comprising:
a configuring module, adapted to configure a multi-ring Ethernet to ensure the multi-ring Ethernet being respective subsets without common links thereamong, wherein the configuring module further comprises: a dividing sub-module, adapted to divide the multi-ring Ethernet into multiple subsets without the common links thereamong, wherein each subset comprises at least one of a primary ring and a sub-ring, and the primary ring and the sub-ring belong to the subsets; and
a controlling module, adapted to control the respective subsets in the multi-ring Ethernet to control protection switch of the multi-ring Ethernet, wherein the protection switch is controlled by only one of the respective subsets depending on which subset is concerned of an error, wherein the controlling module further comprises: a port controlling sub-module, adapted to block or open a port of a ring protection link attribution node of the primary ring in the case that the primary ring controls the protection switch of the multi-ring Ethernet; and block or open a port of a ring protection link attribution node of the sub-ring in the case that the sub-ring controls the protection switch of the multi-ring Ethernet; **characterized in that**
the device further comprises means for:
further configuring the multi-ring Ethernet to ensure that there is no common link among the respective subsets in the multi-ring Ethernet and there are common nodes between the adjacent subsets;
when the common nodes obtain an identifier indicating the attribution of a ring, performing a judgement according to the identifier indicating the attribution of a ring, wherein if a current subset is the primary ring, the blocking or opening a port of a ring protection link attribution node of the primary ring, when the primary ring controls the protection switch of the multi-ring Ethernet, is executed; and if the current subset is the sub-ring, the blocking or opening a port of a ring protection link attribution node of the sub-ring, when the sub-ring controls the protection switch of the multi-ring Ethernet, is executed;
wherein when the identifier indicating the attribution of a ring is encapsulated in a format of a local request, the performing a judgement according to the identifier indicating the attribution of a ring comprises:
positioning a ring to the corresponding subset protection protocol by the identifier indicating the attribution of the ring according to a corresponding relationship between the identifier indicating the attribution of a ring and a subset protection protocol to which a ring belongs;
wherein if the subset protection protocol is a ring protection protocol of the primary ring, the current subset is determined to be the primary ring; and if the subset protection protocol is a ring protection protocol of the sub-ring, the current subset is determined to be the sub-ring.

## Patentansprüche

1. Verfahren zum Schützen eines Mehrring-Ethernetzes, **gekennzeichnet durch** Aufbauen eines Mehrring-Ethernetzes, um sicherzustellen, daß in dem Mehrring-Ethernetz entsprechende Teilstücke ohne allgemeine Verknüpfung unter ihnen vorhanden sind, wobei der Schritt des Aufbaus des Mehrring-Ethernetzes zur Sicherstellung, daß das Mehrring-Ethernetz entsprechende Teilstücke ohne die allgemeinen Verknüpfungen unter ihnen bildet, folgendes umfaßt: Aufteilen des Mehrring-Ethernetzes in viele Teilstücke ohne die allgemeinen Verknüpfungen unter ihnen, wobei jedes Teilstück wenigstens einen Primärring und einen Teilring aufweist, und der Primärring sowie der Teilring zu der Teilmenge gehören, und die entsprechenden Teilringe in dem Mehrring-Ethernetz den Schutzschalter des Mehrring-Ethernetzes entsprechend steuern, wobei ferner der Schutzschalter **durch** nur einen der entsprechenden Teilringe gesteuert wird, und zwar abhängig davon, welcher Teilring mit einem Fehler behaftet ist, wobei der Schritt, daß die entsprechenden Teilringe in dem Mehrring-Ethernetz den Schutzschalter des Mehrring-Ethernetzes entsprechend steuern, folgendes umfaßt: A1. Versperren oder Öffnen einer Öffnung eines Ringschutz-Gliedattributknotens des Primärrings, wenn der Primärring den Schutzschalter des Mehrring-Ethernetzes steuert; und A2. Versperren oder Öffnen einer Öffnung eines Ringschutz-Gliedattributknotens des Teilrings, sobald der Teilring den Schutzschalter des Mehrring-Ethernetzes steuert, **dadurch** gekennzeichnet, daß das Verfahren die weiteren Schritte aufweist: Weiteraufbauen des Mehrring-Ethernetzes, um sicherzustellen, daß sich unter den entsprechenden Teilstücken in dem Mehrring-Ethernetz keine allgemeine Verbindung befindet, und daß zwischen den benachbarten Teilstücken allgemeine Knoten vorhanden sind; wenn die allgemeinen Knoten ein Kennzeichen erhalten, daß die Zuordnung eines Rings anzeigt, was eine Beurteilung gemäß dem die Zuordnung eines Rings anzeigenden Kennzeichen ermöglicht, wobei dann, wenn ein gegenwärtiges Teilstück der Primärring ist, das Verfahren gemäß A1 ausgeführt wird und wenn das gegenwärtige Teilstück ein Teilring ist, das Verfahren A2 ausgeführt wird; wobei dann, wenn das Kennzeichen anzeigt, daß die Zuordnung eines Rings in Form einer lokalen Anfrage eingeschlossen ist, der Schritt der Durchführung einer Beurteilung gemäß dem Kennzeichen, daß die Zuordnung eines Rings umfaßt, folgendes aufweist: Positionieren eines Rings zu dem entsprechenden Teilstück-Schutzprotokoll **durch** das Kennzeichen, das die Zuordnung des Rings gemäß einer entsprechenden Beziehung zwischen dem Kennzeichen, das die Zuordnung eines Rings anzeigt und einem Teilstück-Schutzprotokoll umfaßt, zu dem ein Ring gehört; wobei dann, wenn das Teilstück-Schutzprotokoll ein Ringschutzprotokoll des Primärrings ist, das gegenwärtige Teilstück dazu bestimmt ist, der Primärring zu sein, und wenn das Teilstück-Schutzprotokoll ein Ringschutzprotokoll des Teilrings ist, das gegenwärtige Teilstück dazu bestimmt wird, der Teilring zu sein.

2. Verfahren nach Anspruch 1, **dadurch gekennzeichnet, daß** das Kennzeichen, das die Zuordnung eines Rings anzeigt, ein Ringkennzeichen oder ein Verbindungskennzeichen in dem Ring ist.

3. Verfahren nach Anspruch 1, **dadurch gekennzeichnet, daß** dann, wenn das Kennzeichen, das die Zuordnung eines Rings anzeigt, in einem Format eines entfernt liegenden Protokollrahmens eingeschlossen ist, der Schritt der Durchführung einer Beurteilung gemäß dem Kennzeichen, das die Zuordnung eines Rings anzeigt, folgendes umfaßt: Positionieren eines Rings in dem entsprechenden Teilstück-Schutzprotokoll durch das Kennzeichen, das die Zuordnung des Rings gemäß einer entsprechenden Beziehung zwischen dem Kennzeichen anzeigt, welches die Zuordnung eines Rings und eines Teilstück-Schutzprotokolls, zu der ein Ring gehört, betrifft, wobei das Teilstück-Schutzprotokoll ein Ringschutzprotokoll des Primärrings ist und das gegenwärtige Teilstück durch den Primärring bestimmt wird, und dann, wenn das Teilstück-Schutzprotokoll ein Ringschutzprotokoll des Teilrings ist, das gegenwärtige Teilstück dazu bestimmt wird, der Teilring zu sein, wobei das Kennzeichen, das die Zuordnung eines Rings anzeigt, ein Ringkennzeichen oder ein Verbindungskennzeichen in dem Ring ist; oder das Verwenden der Rahmenkennzeichnung des entfernten Protokollrahmens zur Identifizierung des gegenwärtigen Teilstücks dient und zur Bestimmung des gegenwärtigen Teilstücks zum primären oder zum Teilring gemäß dem Rahmenkennzeichen oder dem entfernten Protokollrahmen; oder zur Bestimmung des gegenwärtigen Teilstücks zum Primärring oder zum Teilring gemäß einem Knoten stattfindet, zu dem ein Anschluß gehört, der durch den entfernt liegenden Protokollrahmen angegeben wird.

4. Vorrichtung zum Schützen eines Mehrring-Ethernetzes, umfassend einen Gestaltungsmodul, der in der Lage ist, ein Mehrring-Ethernetz zu gestalten, um sicherzustellen, daß das Mehrring-Ethernetz entsprechende Teilstücke aufweist, ohne daß gewöhnliche Verbindungen untereinander bestehen, wobei das Gestaltungsmodul des weiteren folgendes umfaßt: einen teilenden Untermodul, der in der Lage ist, das Mehrring-Ethernetz in viele Teilstücke aufzuteilen, ohne daß unter ihnen gewöhnliche Verbindungen bestehen, wobei jedes Teilstück wenigstens einen Primärring und / oder einen Unterring aufweist, und der Primärring sowie der Unterring zu den Teilstücken gehören; und des weiteren umfassend einen Steuermodul, der in der Lage ist, die entsprechenden Teilstücke in dem Mehrring-Ethernetz zu steuern und dadurch einen Schutzschalter des Mehrring-Ethernetzes zu steuern, wobei der Schutzschalter von nur einem der entsprechenden Teilstücke gesteuert wird, und zwar in Abhängigkeit davon, welches Teilstück mit einem Fehler behaftet ist, wobei ferner der steuernde Modul des weiteren einen Anschluß steuernden Untermodul umfaßt, der in der Lage ist, einen Anschluß eines Ringschutz-Verbindungszuordnungsknoten des Primärrings für den Fall zu blockieren oder zu öffnen, daß der Primärring den Schutzschalter des Mehrring-Ethernetzes steuert, und in der Lage ist, einen Anschluß eines Ringschutz-Verbindungszuordnungsknotens des Unterrings für den Fall zu blockieren oder zu öffnen, wobei der Unterring den Schutzschalter des Mehrring-Ethernetzes steuert, **dadurch gekennzeichnet, daß** die Vorrichtung ferner Einrichtungen aufweist, die dazu dienen, das Mehrring-Ethernetz weiter zu gestalten, um sicherzustellen, daß es keine übliche Verbindung unter den entsprechenden Unterstücken in dem Mehrring-Ethernetz gibt und daß zwischen den benachbarten Unterstücken gemeinsame Knoten vorhanden sind; daß ferner dann, wenn die gemeinsamen Knoten ein Kennzeichen erhalten, das die Zuordnung eines Rings anzeigt, eine Beurteilung gemäß dem Kennzeichen durchführt, wird das die Zuordnung eines Ringes anzeigt, wobei dann, wenn ein gegenwärtiges Unterstück der Primärring ist, das Blockieren oder Öffnen eines Anschlusses eines Ringschutz-Verbindungszuordnungsknotens des Primärringes stattfindet, wenn der Primärring den Schutzschalter des Mehrring-Ethernetzes steuert; und wenn das gegenwärtige Unterstück der Unterring ist, das Versperren oder Öffnen eines Anschlusses eines Ringschutz-Verbindungs-Zuordnungsknotens des Unterrings stattfindet, sobald der Unterring den Schutzschalter des Mehrring-Ethernetzes steuert; wobei des weiteren dann, wenn das Kennzeichen, das die Zuordnung eines Rings angibt, in einem Format einer lokalen Aufforderung eingeschlossen ist, die Durchführung einer Beurteilung gemäß dem Kennzeichen, das die Zuordnung eines Ringes anzeigt, folgendes umfaßt: Positionieren eines Rings für das entsprechende Unterstück-Schutzprotokoll durch das Kennzeichen, das die Zuordnung des Rings gemäß einer entsprechenden Beziehung zwischen dem Kennzeichen, das die Zuordnung eines Rings angibt und einem Unterstück-Schutzprotokoll anzeigt, zu dem ein Ring gehört; wobei dann, wenn das Unterstück-Schutzprotokoll ein Ringschutzprotokoll des Primärrings ist, das gegenwärtige Unterstück dazu bestimmt ist, der Primärring zu sein; und dann, wenn das Unterstück-Schutzprotokoll ein Ringschutzprotokoll des Unterrings ist, das gegenwärtige Unterstück dazu bestimmt ist, der Unterring zu sein.

## Revendications

1. Procédé pour protéger un Ethernet multi-anneau, **caractérisé en ce qu'**il comprend :
configurer un Ethernet multi-anneau pour garantir que l'Ethernet multi-anneau soit des sous-ensembles respectifs sans lien commun entre eux, où l'étape de configuration de l'Ethernet multi-anneau pour garantir que l'Ethernet multi-anneau soit des sous-ensembles respectifs sans les liens communs entre eux comprend : la division de l'Ethernet multi-anneau en de multiples sous-ensembles sans les liens communs entre eux, où chaque sous-ensemble comprend au moins un d'un anneau primaire et d'un sous-anneau, et l'anneau primaire et le sous-anneau appartiennent aux sous-ensembles ; et
les sous-ensembles respectifs dans l'Ethernet multi-anneau commandant un commutateur de protection de l'Ethernet multi-anneau respectivement, où le commutateur de protection est commandé par un seul des sous-ensembles respectifs en fonction du sous-ensemble qui est concerné par une erreur, où l'étape des sous-ensembles respectifs dans l'Ethernet multi-anneau commandant le commutateur de protection de l'Ethernet multi-anneau respectivement comprend : A1. le blocage ou l'ouverture d'un port d'un noeud d'attribution de lien de protection d'anneau de l'anneau primaire, lorsque l'anneau primaire commande le commutateur de protection de l'Ethernet multi-anneau ; et A2. le blocage ou l'ouverture d'un port d'un noeud d'attribution de lien de protection d'anneau du sous-anneau, lorsque le sous-anneau commande le commutateur de protection de l'Ethernet multi-anneau ; **caractérisé en ce que** :
le procédé comprend en outre :
configurer en outre l'Ethernet multi-anneau pour garantir qu'il n'y ait pas de lien commun entre les sous-ensembles respectifs dans l'Ethernet multi-anneau et qu'il y ait des noeuds communs entre les sous-ensembles adjacents ;
lorsque les noeuds communs obtiennent un identificateur indiquant l'attribution d'un anneau, l'exécution d'un jugement selon l'identificateur indiquant l'attribution d'un anneau, où si un sous-ensemble actuel est l'anneau primaire, l'A1 est exécuté ; et si le sous-ensemble actuel est le sous-anneau, l'A2 est exécuté ;
dans lequel lorsque l'identificateur indiquant l'attribution d'un anneau est encapsulé dans un format d'une demande locale, l'étape d'exécution d'un jugement selon l'identificateur indiquant l'attribution d'un anneau comprend :
positionner un anneau sur le protocole de protection de sous-ensemble correspondant par l'identificateur indiquant l'attribution de l'anneau selon une relation correspondante entre l'identificateur indiquant l'attribution d'un anneau et un protocole de protection de sous-ensemble auquel appartient un anneau ;
dans lequel si le protocole de protection de sous-ensemble est un protocole de protection d'anneau de l'anneau primaire, le sous-ensemble actuel est déterminé comme étant l'anneau primaire ; et si le protocole de protection de sous-ensemble est un protocole de protection d'anneau du sous-anneau, le sous-ensemble actuel est déterminé comme étant le sous-anneau.

2. Procédé selon la revendication 1, **caractérisé en ce que** l'identificateur indiquant l'attribution d'un anneau comprend un identificateur d'anneau ou un identificateur de lien dans l'anneau.

3. Procédé selon la revendication 1, **caractérisé en ce que** lorsque l'identificateur indiquant l'attribution d'un anneau est encapsulé dans un format d'une trame de protocole à distance, l'étape d'exécution d'un jugement selon l'identificateur indiquant l'attribution d'un anneau comprend :
positionner un anneau sur le protocole de protection de sous-ensemble correspondant par l'identificateur indiquant l'attribution de l'anneau selon une relation correspondante entre l'identificateur indiquant l'attribution d'un anneau et un protocole de protection de sous-ensemble auquel appartient un anneau ;
dans lequel si le protocole de protection de sous-ensemble est un protocole de protection d'anneau de l'anneau primaire, le sous-ensemble actuel est déterminé comme étant l'anneau primaire ; et si le protocole de protection de sous-ensemble est un protocole de protection d'anneau du sous-anneau, le sous-ensemble actuel est déterminé comme étant le sous-anneau ; dans lequel l'identificateur indiquant l'attribution d'un anneau comprend un identificateur d'anneau ou un identificateur de lien dans l'anneau ;
ou,
utiliser un identificateur de trame de la trame de protocole à distance pour identifier le sous-ensemble actuel et la détermination du sous-ensemble actuel comme étant l'anneau primaire ou le sous-anneau selon l'identificateur de trame de la trame de protocole à distance ;
ou,
déterminer le sous-ensemble actuel comme étant l'anneau primaire ou le sous-anneau selon un noeud auquel un port rapporté par la trame de protocole à distance appartient.

4. Dispositif pour protéger un Ethernet multi-anneau, **caractérisé en ce qu'**il comprend :
un module de configuration, adapté pour configurer un Ethernet multi-anneau pour garantir que l'Ethernet multi-anneau soit des sous-ensembles respectifs sans liens communs entre eux, où le module de configuration comprend en outre : un sous-module de division, adapté pour diviser l'Ethernet multi-anneau en de multiples sous-ensembles sans les liens communs entre eux, où chaque sous-ensemble comprend au moins un d'un anneau primaire et d'un sous-anneau, et l'anneau primaire et le sous-anneau appartiennent aux sous-ensembles ; et
un module de commande, adapté pour commander les sous-ensembles respectifs dans l'Ethernet multi-anneau pour commander un commutateur de protection de l'Ethernet multi-anneau, où le commutateur de protection est commandé par un seul des sous-ensembles respectifs en fonction du sous-ensemble qui est concerné par une erreur, où le module de commande comprend en outre : un sous-module de commande de port, adapté pour bloquer ou ouvrir un port d'un noeud d'attribution de lien de protection d'anneau de l'anneau primaire dans le cas où l'anneau primaire commande le commutateur de protection de l'Ethernet multi-anneau ; et bloquer ou ouvrir un port d'un noeud d'attribution de lien de protection d'anneau du sous-anneau dans le cas où le sous-anneau commande le commutateur de protection de l'Ethernet multi-anneau ; **caractérisé en ce que** :
le dispositif comprend en outre des moyens pour :
configurer en outre l'Ethernet multi-anneau pour garantir qu'il n'y ait pas de lien commun entre les sous-ensembles respectifs dans l'Ethernet multi-anneau et qu'il y ait des noeuds communs entre les sous-ensembles adjacents ;
lorsque les noeuds communs obtiennent un identificateur indiquant l'attribution d'un anneau, effectuer un jugement selon l'identificateur indiquant l'attribution d'un anneau, où si un sous-ensemble actuel est l'anneau primaire, le blocage ou l'ouverture d'un port d'un noeud d'attribution de lien de protection d'anneau de l'anneau primaire, lorsque l'anneau primaire commande le commutateur de protection de l'Ethernet multi-anneau, est exécuté ; et si le sous-ensemble actuel est le sous-anneau, le blocage ou l'ouverture d'un port d'un noeud d'attribution de lien de protection d'anneau du sous-anneau, lorsque le sous-anneau commande le commutateur de protection de l'Ethernet multi-anneau, est exécuté ;
dans lequel lorsque l'identificateur indiquant l'attribution d'un anneau est encapsulé dans un format d'une demande locale, l'exécution d'un jugement selon l'identificateur indiquant l'attribution d'un anneau comprend :
le positionnement d'un anneau sur le protocole de protection de sous-ensemble correspondant par l'identificateur indiquant l'attribution de l'anneau selon une relation correspondante entre l'identificateur indiquant l'attribution d'un anneau et un protocole de protection de sous-ensemble auquel appartient un anneau ;
dans lequel si le protocole de protection de sous-ensemble est un protocole de protection d'anneau de l'anneau primaire, le sous-ensemble actuel est déterminé comme étant l'anneau primaire ; et si le protocole de protection de sous-ensemble est un protocole de protection d'anneau du sous-anneau, le sous-ensemble actuel est déterminé comme étant le sous-anneau.
